(19) Europäisches Patentamt
European Patent Office
Office européen des brevets

(11) **EP 1 338 884 B1**

(12) **EUROPÄISCHE PATENTSCHRIFT**

(45) Veröffentlichungstag und Bekanntmachung des Hinweises auf die Patenterteilung:
**22.06.2011 Patentblatt 2011/25**

(51) Int Cl.:
*G01M 17/007* *(2006.01)*

(21) Anmeldenummer: **03001227.2**

(22) Anmeldetag: **20.01.2003**

(54) **Rollenprüfstand für Kraftfahrzeug**

Roller test bench for motor vehicles

Banc d'essai à rouleaux pour véhicules à moteur

(84) Benannte Vertragsstaaten:
**DE FR**

(30) Priorität: **20.02.2002 DE 10207110**

(43) Veröffentlichungstag der Anmeldung:
**27.08.2003 Patentblatt 2003/35**

(73) Patentinhaber: **MAHA-AIP GmbH & Co. KG**
**87490 Haldenwang (DE)**

(72) Erfinder: **Knestel, Anton**
**87496 Hopferbach (DE)**

(74) Vertreter: **MERH-IP**
**Matias Erny Reichl Hoffmann**
**Paul-Heyse-Strasse 29**
**80336 München (DE)**

(56) Entgegenhaltungen:
**EP-A- 0 280 343 EP-A- 0 367 329**
**EP-A- 0 424 636 EP-A- 0 503 318**
**EP-A- 0 507 631 EP-A- 1 253 416**
**EP-A2- 0 634 638 DE-A1- 19 900 620**
**FR-A- 2 250 988 SU-A1- 741 088**
**US-A- 3 952 589 US-A- 4 370 883**
**US-A- 5 447 060 US-A- 5 657 227**

**Beschreibung**

Die Erfindung betrifft einen Rollenprüfstand für Kraftfahrzeuge mit zwei drehbaren Rollensträngen, die Aufstandsrollen an deren jeweiligen axialen Enden aufweisen, wobei die Räder einer Achse des Fahrzeugs jeweils auf einem Rollenpaar bestehend aus einer Aufstandsrolle des ersten Rollenstrangs und einer Aufstandsrolle des zweiten Rollenstrangs aufstehen (Doppelrollenprüfstand).

Zur Prüfung von fahrdynamischen Parametern und der Abgaswerte von Kraftfahrzeugen werden Rollenprüfstände verwendet, die eine Simulation von unterschiedlichen Fahrbedingungen ermöglichen. Zumindest die angetriebenen Räder des Fahrzeugs stehen dazu auf dem Scheitelbereich je einer Aufstandsrolle bzw. im Rollenprisma eines Rollenpaares auf. Die Aufstandsrollen bzw. die Rollenpaare sind mit Antriebs-/Verzögerungsmaschinen gekoppelt, die entsprechend dem Prüfprogramm vorgegebene Drehmomente bzw. Zugkräfte erzeugen, um Betriebsparameter des Fahrzeugs, beispielsweise die Leistung der Brennkraftmaschine, zu messen oder die Funktionen von Komponenten, beispielsweise Bremsen oder Abgasreinigungsanlage, zu prüfen. Während der Simulation auf dem Prüfstand werden vorgegebene Fahrzyklen durchlaufen und eine Beschleunigung oder Abbremsung des Fahrzeugs durch die eingeleiteten Drehmomente bzw. Kräfte simuliert.

Zur Anpassung der rotierenden Drehmassen des Prüfstands an unterschiedliche Fahrzeugmassen können unterschiedliche Schwungradsätze, mit denen die Fahrzeugmassen simuliert werden, durch Kupplungen an die Rollenstränge angekoppelt werden. Die eigentlichen Drehmassen der Rollen sind in der Regel gegenüber den dominanten Schwungrädern relativ klein. Die Fahrzeugmasse bzw. dessen Massenträgheitsmoment sollte mit der translatorischen Prüfstandmasse übereinstimmen, die der rotierenden Masse des Prüfstands bzw. dessen Massenträgheitsmoment entspricht. Für eine genaue Anpassung des Prüfstands an die Fahrzeugmasse kann zusätzlich die Differenz zwischen der Fahrzeugmasse und den mechanischen Massenabstufungen der Schwungradsätze durch eine elektrische Massensimulation ausgeglichen werden.

In der DE 199 00 620 wird ein Massensimulationsverfahren beschrieben, bei dem durch eine Beschleunigung eine zu simulierende Kraft F für die Differenzmasse m zwischen der mechanischen Prüfstanddrehmasse (Massenträgheitsmoment) und der Fahrzeugmasse aus dem zweiten Newtonschen Gesetz (F= m a) abgeleitet wird:

$$F = m \cdot \frac{\Delta v}{\Delta t},$$

wobei die Beschleunigung der Rolle aus $\frac{\Delta v}{\Delta t}$ bestimmt wird.

Da durch das Ankoppeln der Schwungräder die zu simulierenden Massen in der Regel relativ klein sind (kleiner als 100 kg), führen eventuell auftretende Drehschwingungen bei der Rotation der Rollenstränge, die eine Geschwindigkeitsmessung für die Rollen beeinträchtigen, zu keinen größeren Problemen in der Messung der Rollenbeschleunigung.

Nach der US 5 101 660 kann das zweite Newtonsche Gesetz auch zur Ermittlung der simulierten Fahrgeschwindigkeit angewendet werden:

$$v = \frac{F \cdot t}{m}.$$

m

Bei diesem Verfahren wird die Fahrgeschwindigkeit aus dem Integral der Kraft unter Berücksichtigung der elektrisch zu simulierenden Masse m errechnet. Eventuell auftretende Drehschwingungen bei der Rotation der Rollenstränge haben bei der Integration keinen störenden Einfluß.

Um die mechanisch aufwendige Ankopplung von verschiedenen Schwungradsätzen zu vermeiden, wird bei neueren Prüfständen nur noch ein einzelnes mechanisches Schwungrad eingesetzt. Die verbleibenden Massenunterschiede werden zur Anpassung der rotierenden Prüfstandsmasse an die Fahrzeugmasse durch eine elektrische Massensimulation abgedeckt. Bei einem solchen Prüfstand beträgt beispielsweise die mechanische translatorische Masse des Prüfstands 1.500 kg. Diese wird durch die elektrische Massensimulation an Fahrzeugmassen von beispielsweise 300 bis 3.000 kg angepaßt. Im Vergleich zur mechanischen Massenanpassung ist es jetzt erforderlich, Massen von beispielsweise bis zu 1.500 kg elektrisch zu simulieren. Dies stellt entsprechend hohe Anforderungen an die Sensorik des Prüfstands, insbesondere an die Erfassung der Geschwindigkeit bzw. der Beschleunigung. Eventuell auftretende Drehschwingungen können die Genauigkeit der Geschwindigkeitsmessung beeinträchtigen und sich - verstärkt über die Differenzierung der Geschwindigkeit zur Berechnung der Beschleunigung - auf die zu simulierende Kraft auswirken. Da die zu simulierende Kraft bzw. das entsprechende Drehmoment eine wichtige Regelgröße bei der Regelung der Rollenantriebe ist, können somit durch die Drehschwingungen Regelungsprobleme auftreten.

Besonders vorteilhaft und einfach in der Konstruktion ist es, wenn man die komplette Grundträgheit des Prüfstands in den Rollen vorsieht und auf zusätzliche Schwungräder verzichtet.

Bei Doppelrollenprüfständen laufen die Räder im Rollenprisma eines Rollenpaares und die Fixierung des Fahrzeugs ist weniger aufwendig als bei Scheitelrollenprüfständen. Da die Aufstandsrollen in einem Doppelrollenprüfstand in der Regel einen deutlich kleineren Rollendurchmesser aufweisen (z.B. 500 mm), während gängige Scheitelrollen einen großen Durchmesser (z.B. 1200 mm) und eine größere Schwungmasse besitzen, ist die elektrische Massensimulation für Doppelrollenprüfstände aufwendiger und stellt erhöhte Anforderungen an die Prüfstandssensorik. Beispielsweise haben die vier Einzelrollen eines Doppelrollenprüfstands jeweils eine translatorische Masse von ca. 350 kg (JX = 21,9 kg/m$^2$ bei einem Rollendurchmesser von 500 mm). Die gesamte translatorische Masse des Prüfstands beträgt dann 1.400 kg. Die Differenzmasse zur Fahrzeugmasse wird elektrisch durch Anwendung des zweiten Newtonschen Gesetzes simuliert. Treten nun Drehschwingungen auf, d.h., die Massen der Rollen schwingen gegeneinander, wird eine genaue Massensimulation wegen der Ungenauigkeiten bei der Geschwindigkeitsmessung beeinträchtigt.

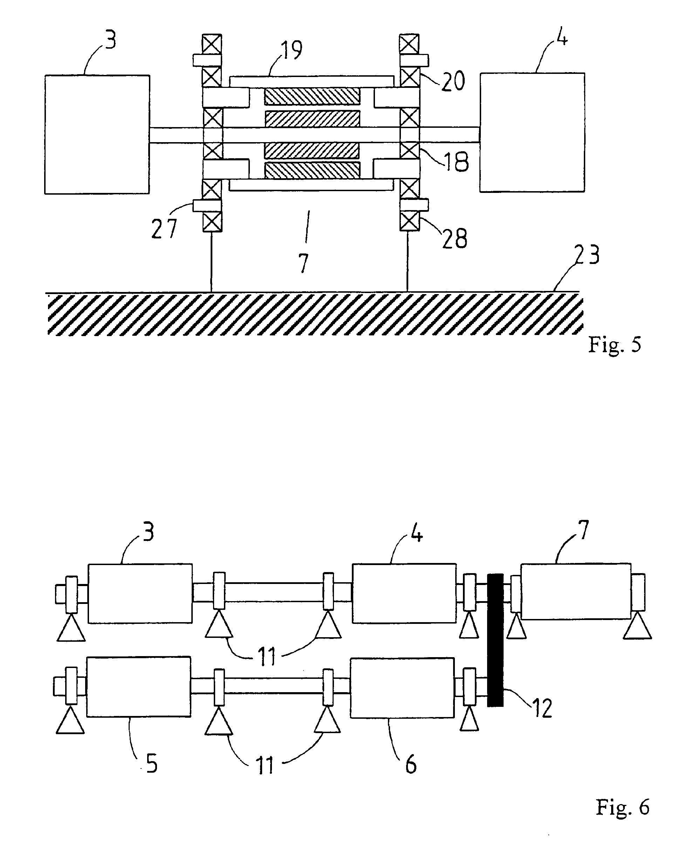

Nach dem herkömmlichen Aufbau eines Doppelrollenprüfstands in der sogenannten Inline-Variante ist der Antriebsmotor in Verlängerung eines ersten Rollenstrangs mit zwei Aufstandsrollen für die linke und rechte Spur des Fahrzeugs angebracht. In der Figur 6 wird ein herkömmlicher Aufbau für einen Doppelrollenprüfstand dargestellt. Der Antriebsmotor treibt den ersten Rollenstrang direkt und den zweiten Rollenstrang über eine mechanische Rollenstrangverbindung, zumeist ein Riemen oder eine Kette. Die Wellen des ersten und des zweiten Rollenstrangs sind in der Regel durch eine Vielzahl von Lagern drehbar gelagert. Durch die dadurch auftretenden Lagerreibungsverluste, die zudem nicht konstant sind und beispielsweise von Luftdruck und Lagertemperatur abhängen, ist es schwierig, die exakten Kräfte bzw. Drehmomente zur genauen Simulation von Fahrwiderständen zu bestimmen, da die zeitlich wechselnde Lagerreibung an nicht kompensierten Lagerstellen dem Motordrehmoment entgegenwirkt. Nicht kompensierte Lager liegen außerhalb der Meß- bzw. Regelkette. Dies führt zu unstabilen Prüfstandseigenverlusten, die die Meßgenauigkeit des Prüfstands beeinflussen.

Bei dem herkömmlichen Aufbau eines Doppelrollenprüfstands können zudem starke Dreh- bzw. Torsionsschwingungen bedingt durch eine geringere Torsionssteifigkeit der Wellen auftreten. Auch durch die mechanische Rollenstrangverbindung zwischen dem ersten und zweiten Rollenstrang wird das Feder-Masse-System der Rollenstränge bedingt durch die Elastizität des Riemens bzw. der Kette beeinflußt und die Ausbildung von Torsionsschwingungen wird begünstigt. Aufgrund der Torsionsschwingungen werden die Drehzahlmessungen gestört, was zu Problemen in der Regelung der Drehgeschwindigkeit und/oder der Beschleunigung der Rollen führen kann. Meßungenauigkeiten bei der Erfassung der Rollendrehzahl werden zudem beim Differenzieren zur Ermittlung der Rollenbeschleunigung verstärkt. Da zur Simulation von Fahrwiderstandskräften die am Fahrzeugrad angreifende Zugkraft proportional zur Rollenbeschleunigung ist, wird durch die Torsionsschwingungen die Genauigkeit der Fahrsimulation bzw. der Massensimulation beeinträchtigt.

Da insbesondere bei Doppelrollenprüfständen mit relativ geringer translatorischer Masse der Rollen eine elektrische Simulation von großen Differenzmassen erforderlich ist, haben Drehschwingungen zwischen den Massen der Rollenstränge einen störenden Einfluß. Bei der seitlichen Ankopplung des Antriebsaggregats treten beispielsweise Schwingungen zwischen den beiden Massen (Rollen) des vorderen Rollenstrangs gegeneinander auf, wobei die Welle des Rollenstrangs das elastische Element darstellt. Durch die Kopplung der beiden Rollenstränge entsteht zudem eine Elastizität zwischen den vorderen und hinteren Drehmassen (beispielsweise jeweils 700 kg translatorisch) der Rollenstränge, die eine Schwingung der beiden Rollenstränge gegeneinander bewirkt. Ein solcher Rollenprüfstand ist aus dem Dokument EP-A-0 424 636 bekannt.

Ein weiterer Nachteil der Inline-Motoranordnung ist der große seitliche Platzbedarf. Insbesondere für mobile Prüfstände, die beispielsweise auf einem Anhänger oder LKW montiert sind, die nicht viel breiter als das zu prüfende Kraftfahrzeug sind, ist es schwierig, den Antriebsmotor in Verlängerung eines Rollenstrangs anzuordnen.

Die Aufgabe der vorliegenden Erfindung ist es, einen kompakten Doppelrollenprüfstand mit verminderten Reibungsverlusten zu schaffen, bei dem geringe Torsionsschwingungen auftreten und eine genaue Simulation von Fahrwiderstandskräften bzw. von rotierenden Massen möglich ist.

Diese Aufgabe wird erfindungsgemäß durch den unabhängigen Patentanspruch gelöst. Die abhängigen Patentansprüche betreffen vorteilhalte Ausgestaltungen der Erfindung.

Ein erfindungsgemäßer Rollenprüfstand für Kraftfahrzeuge weist zwei drehbare Rollenstränge mit Aufstandsrollen und einer die Aufstandsrollen verbindenden Rollenstrangwelle auf. Die Aufstandsrollen sind bevorzugt an den jeweiligen axialen Endbereichen der Rollenstränge angeordnet. Die Räder einer Achse des Fahrzeugs stehen jeweils auf einem Rollenpaar bestehend aus einer Aufstandsrolle des ersten Rollenstrangs und einer Aufstandsrolle des zweiten Rollenstrangs auf. Die beiden Rollenstränge sind vorzugsweise parallel angeordnet, so daß die Fahrzeugräder im Rollenprisma der Aufstandsrollen laufen. Die Aufstandsrollen eines Rollenstrangs können durch eine drehbare Welle fest miteinander verbunden sein oder über eine oder mehrere Kupplungen an die Welle angekuppelt werden. Der Durchmesser der Aufstandsrollen beträgt vorzugsweise 200 bis 600 mm, wobei gängige Rollen einen Durchmesser von 20 Zoll oder 500 mm aufweisen. In der Abgasmeßtechnik sind Rollendurchmesser von 220 bis 550 mm üblich. Der Abstand der beiden Aufstandsrollen eines Rollenstrangs zueinander und die Breite der Aufstandsrollen sind derart bemessen, daß Fahrzeuge mit unterschiedlichen Spurbreiten auf den Aufstandsrollen aufstehen können. Zur Prüfung von allradgetriebenen Fahrzeugen können auch zwei solche Rollensätze für die beiden Achsen des Fahrzeugs vorgesehen sein.

Erfindungsgemäß ist mindestens ein Antriebsaggregat zum Antreiben oder Verzögern von zumindest einem Rollenstrang und eine Steuereinheit für das Antriebsaggregat vorgesehen. Durch das Antriebsaggregat können die Aufstandsrollen angetrieben oder verzögert werden, um Kräfte zur Simulation von Fahrwiderständen an den Rädern des Fahrzeugs einzuleiten. Während der Fahrwiderstandssimulation werden von dem Fahrzeug auf dem Rollenprüfstand vorgegebene Prüfzustände durchlaufen, um beispielsweise die Abgasemissionen des Fahrzeugs oder dergleichen zu ermitteln. Das Antriebsaggregat ist zweckmäßigerweise als Gleichstrommotor, Drehstrom-Asynchronmotor oder Drehstrom-Synchronmotor ausgebildet. Insbesondere Synchronmaschinen können unter Verwendung von Frequenzumrichtern vorteilhaft zur Erzeugung eines vorgegebenen Drehmoments oder einer vorgegebenen Drehzahl herangezogen werden.

Zur Simulation von ausgewählten Fahrzuständen steuert bei einer bevorzugten Ausgestaltung der Erfindung die Steuereinrichtung unter Berücksichtigung spezifischer Fahrzeugdaten das Antriebsaggregat, um entsprechende Lasten in Form von Zugkräften auf die Fahrzeugräder aufzugeben. Durch die entsprechenden Zugkräfte können unterschiedliche Fahrwiderstände, beispielsweise für Steigungen oder Gefälle simuliert werden. Die Steuereinheit kann weiterhin Ein- und Ausgabeeinheiten zur Bedienung und zur Datenkommunikation aufweisen und beispielsweise durch einen Prozeßrechner oder ein programmierbares Steuergerät realisiert werden.

Erfindungsgemäß ist das Antriebsaggregat in einem Bereich angeordnet, der durch die axial innen liegenden Enden der Aufstandsrollen begrenzt ist. Durch die innenliegende Anordnung des Antriebsaggregats ist ein sehr kompakter Aufbau des Rollenprüfstands möglich, da keine seitlich, über die Aufstandsrollen hinausragenden Antriebsoder Verbindungsvorrichtungen vorgesehen sind. Durch die erfindungsgemäße Anordnung des Antriebsaggregats kann der Rollenprüfstand beispielsweise auf einem Anhänger oder LKW montiert werden, die nicht viel breiter als die zu prüfenden Fahrzeuge sind.

Da durch die innenliegende Anordnung des Antriebsaggregats eine Einleitung der Antriebskraft auf die Rollenstränge zwischen den Aufstandsrollen erfolgt, entsteht ein torsionssteiferer Aufbau im Vergleich zur herkömmlichen Inline-Anordnung. Vorteilhafterweise erfolgt die Einleitung des Antriebsmoments in den Rollenstrang mittig. Die maximale Weglänge vom Ort der Krafteinleitung auf den Rollenstrang zum Ort der Belastung des Rollenstrangs wird erfindungsgemäß verringert, was zu einem verminderten Federeffekt der Welle und zu Verbesserungen in den Eigenschaften des Feder-Masse-Systems des Rollenstrangs führt. Wird die Antriebskraft erfindungsgemäß mittig in den Rollenstrang eingekoppelt, so schwingen die beiden Drehmassen des Rollenstrangs nicht gegenphasig. Durch die erfindungsgemäße Anordnung des Antriebsaggregats werden die Dreh- bzw. Torsionsschwingungen der Drehmassen der Rollenstränge vermindert, was unter anderem zu stabileren Drehzahlmessungen, einer Erhöhung der Meßgenauigkeit für die Beschleunigungsmessung und einer Verbesserung der Regeldynamik führt. Besonders die Regelung der Beschleunigung für die elektrische Massensimulation wird dadurch verbessert.

Eine vorteilhafte Ausgestaltung der Erfindung sieht vor, das Antriebsaggregat über eine mittig zwischen den Ausstandsrollen an dem Rollenstrang angeordnete Riemenverbindung, insbesondere ein Zahnriemen, mit dem Rollenstrang zu koppeln. Das Antriebsmoment kann auf diese Weise mittig in den Rollenstrang eingeleitet werden, um Drehschwingungen der Aufstandsrollen zu reduzieren. Das Antriebsaggregat kann in dem durch die Aufstandsrollen in Rollenstranglängsrichtung begrenzten Bereich angeordnet sein. Es ist vorteilhaft, wenn das Antriebsaggregat aus Platzgründen nicht direkt zwischen den Aufstandsrollen angeordnet ist, sondern sich in Prüfstandlängsrichtung vor oder hinter den Rollensträngen befindet.

Durch die kompakte Bauweise des erfindungsgemäßen Rollenprüfstands wird es ermöglicht, in axialer Richtung unmittelbar neben den Aufstandsrollen weitere Vorrichtungen, wie beispielsweise Haltevorrichtungen für das Fahrzeug, anzubringen. Durch die innenliegende Anordnung des Antriebsaggregats kann der erfindungsgemäße Rollenprüfstand mit weniger nicht kompensierten Lagerungen und somit mit verminderten bzw. kompensierbaren Prüfstandseigenverlusten realisiert werden.

Eine weitere vorteilhafte Ausgestaltung der Erfindung sieht vor, das Antriebsaggregat zwischen den beiden Aufstandsrollen des ersten Rollenstrangs anzuordnen, um die Antriebskraft direkt auf die Welle des ersten Rollenstrangs einzuleiten. Weiterhin ist es vorteilhaft, wenn die Drehachse der Aufstandsrollen des angetriebenen Rollenstrangs mit der Drehachse einer Rotorwelle des Antriebsaggregats übereinstimmt, da sich für den Fall einer gemeinsamen Drehachse besonders günstige Schwingungs- und Torsionseigenschaften für den Rollenstrang ergeben und dieser besonders einfach aufgebaut ist. Eine besonders zweckmäßige Ausführung der Erfindung sieht vor, daß die Aufstandsrollen an den axialen Enden einer einstückigen, durchgehenden Rotorwelle des Antriebsmotors angebracht sind. Bei Verwendung eines Elektromotors als Antriebsaggregat weist die Rotorwelle zwischen den Aufstandsrollen die Rotorwicklungen des Elektromotors auf. Eine einstückige Ausbildung der Rollenstrangwelle ist sehr stabil und steif, so daß wenig Torsion und Durchbiegung auftritt. Durch eine symmetrische Einleitung der (Pendel)-Momente in das Massesystem des Rollenstrangs treten keine Torsionsschwingungen zwischen den Massen (Rollen) des Rollenstrangs auf. Ein Ausgleich der Torsionsschwingungen ist nicht erforderlich.

Ein erfindungsgemäßer Rollenprüfstand weist vorzugsweise zumindest eine Meßeinrichtung zur Ermittlung der Drehgeschwindigkeit und/oder der Winkellage des Rollenstrangs auf. Anhand des erfaßten Meßsignals kann die Steuereinheit die Drehgeschwindigkeit und/oder die Winkellage der Aufstandsrollen regeln. Zur Messung der Drehgeschwindigkeit und/oder der Winkellage können an den Aufstandsrollen und/oder den Rollenstrangwellen Sensoren angebracht sein. Insbesondere bei mittiger Krafteinkopplung in den Rollenstrang schwingen die beiden Drehmassen des Rollenstrangs nicht gegenphasig, wodurch es möglich ist, mit einem Sensor an einem Wellenende die Geschwindigkeit bzw. Beschleunigung des Rollenstrangs zu erfassen. Die Messung kann mittels Inkrementalencoder oder sogenannter Sinus-/ Kosinus-Encoder erfolgen.

Um Schwingungsfrequenzen bis 30 Hz phasenrichtig kompensieren zu können, ist es zweckmäßig, die Ermittlung der Beschleunigung mit einer um den Faktor 10 höheren Geschwindigkeit durchzuführen, da die Beschleunigung zur Massensimulation und zur Regelung der Antriebsaggregate herangezogen wird. Die Ermittlung der Beschleunigung der Aufstandsrollen erfolgt zweckmäßigerweise zweihundert- bis dreihundertmal pro Sekunde durch Differenzieren der erfaßten Geschwindigkeit. Um die notwendige Genauigkeit der berechneten Beschleunigung zu erzielen, ist es vorteilhaft, wenn die Geschwindigkeit mit einer Genauigkeit von mindestens 14 Bit erfaßt wird. Um die geforderte hohe zeitliche Auflösung und die erforderliche Genauigkeit bei der Geschwindigkeitserfassung zu erzielen, ist es vorteilhaft, Sinus/ Kosinus-Encoder zu verwenden.

Zur Verbesserung der Drehzahlmessung können an einem beliebigen Rollenprüfstand für Kraftfahrzeuge mehrere Meßeinrichtungen vorgesehen sein, deren Meßsignale überlagert werden, insbesondere durch Addition oder Mittelwertbildung. Durch eine gegenphasige Überlagerung von Störsignalen können diese unterdrückt werden und es wird eine genauere Drehzahlmessung ermöglicht. Die Meßeinrichtungen können an verschiedenen Orten eines Rollenstrangs oder an unterschiedlichen Rollensträngen derart angebracht werden, daß Störsignale gegenphasig auf den Meßsignalen auftreten. Die Meßsignale können auch geeignet phasenverschoben addiert werden, um Störungen zu unterdrücken. Durch eine entsprechende Anordnung kann insbesondere die niederfrequente Modulation des Drehzahlsignals (ca. 10 Hz) durch die Torsionsschwingungen in den Rollensträngen reduziert werden. Infolge der verbesserten Drehgeschwindigkeits- oder Winkellagesignale kann die Rollenbeschleunigung genauer ermittelt werden, wodurch eine präzisere Simulation der Fahrwiderstandskräfte bzw. der Differenzmassen ermöglicht wird.

Ein erfindungsgemäßer Rollenprüfstand für Kraftfahrzeuge weist zumindest einen drehbaren Rollenstrang mit Aufstandsrollen, mindestens ein Antriebsaggregat zum Antreiben oder Verzögern des Rollenstrangs, eine Steuereinheit für das Antriebsaggregat und zumindest zwei Meßeinrichtungen zur Ermittlung einer Drehgeschwindigkeit und/oder einer Winkellage der Rollenstränge auf, wobei zumindest die Räder einer Achse des Fahrzeugs auf den Aufstandsrollen aufstehen und die Steuereinheit zur Unterdrückung von Störungen in der ermittelten Drehgeschwindigkeit und/oder Winkellage die Signale der Meßeinrichtungen berücksichtigt.

In einem Verfahren zur Unterdrückung von Störungen in Drehgeschwindigkeits- und/oder Winkellagesignalen von Rollenprüfständen für Kraftfahrzeuge werden mehrere Drehgeschwindigkeits- und/oder Winkellagesignale für den zumindest einen drehbaren Rollenstrang, auf dessen Aufstandsrollen die Räder des Fahrzeugs aufstehen, erfaßt und gegebenenfalls phasenverschoben addiert.

Zweckmäßigerweise ist mindestens eine Kraft- bzw. Drehmomentmeßeinrichtung vorgesehen, die die von dem Antriebsaggregat aufgebrachte Kraft bzw. das Drehmoment ermittelt. Zur Kraft- bzw. Drehmomentmessung kann beispielsweise der vom Antriebsaggregat aufgenommene Strom herangezogen werden. Bevorzugt kann auch ein mechanischer Kraft- bzw. Drehmomentsensor, beispielsweise eine Kraftmeßdose oder ein Dehnungsmeßstreifen, vorgesehen sein.

Zum Antrieb des zweiten Rollenstrangs ist bei einer bevorzugten Ausgestaltung der Erfindung eine mechanische Rollenstrangverbindung, insbesondere ein Riemen, ein Zahnriemen oder eine Kette, vorgesehen. Durch die Rollenstrangverbindung wird die Drehbewegung des zweiten Rollenstrangs mechanisch mit der Drehbewegung des angetriebenen ersten Rollenstrangs gekoppelt, um eine synchrone Drehung der Aufstandsrollen zu erzielen. Dabei kann es besonders wichtig sein, die Drehbewegungen der jeweiligen Aufstandsrollen der Rollenpaare genau zu synchronisieren, um einen Schlupf zwischen Fahrzeugrad und dem entsprechenden Aufstandsrollenpaar zu verhindern. Zur Erzielung günstiger Torsionseigenschaften können mehrere Rollenstrangverbindungen vorgesehen sein. Vorzugsweise erfolgt eine symmetrische Aufteilung des Kraftflusses von dem angetriebenen Rollenstrang zu dem zweiten Rollenstrang durch das Vorsehen von zwei Rollenstrangverbindungen, die jeweils am axial innen liegenden Ende eines Rollenpaares angeordnet sind. Die Anordnung der Rollenstrangverbindungen kann asymmetrisch oder symmetrisch zur Prüfstandsmittelachse erfolgen. Eine symmetrische Anordnung der Rollenstrangverbindungen, beispielsweise symmetrische Riemenverbindungen zwischen den Rollensträngen, führt zur Verringerung von Torsionsschwingungen zwischen den Drehmassen der Rollen. Zum Ausgleich der Drehschwingungen des ersten Rollenstrangs zum zweiten Rollenstrang kann jeweils ein hochauflösender Geschwindigkeitssensor für die Rollenstränge verwendet werden, wobei die erfaßten Geschwindigkeiten bzw. die errechneten Beschleunigungen der Rollenstränge phasenrichtig arithmetrisch gemittelt werden, um den Einfluß der Drehschwingungen auszugleichen.

Eine weitere vorteilhafte Ausgestaltung der Erfindung sieht vor, die beiden Rollenstränge über eine gemeinsame Kette oder einen gemeinsamen Riemen, insbesondere einen Zahnriemen, mit dem Antriebsaggregat zu verbinden. Die gemeinsame Verbindung leitet das Antriebsmoment bevorzugt in der Mitte der Rollenstränge in diese ein, um Torsionsschwingungen zu reduzieren. Das Antriebsaggregat ist zweckmäßigerweise in dem Bereich zwischen den Rollensträngen und unterhalb der Rollenstränge angeordnet, um eine Dreiecksanordnung für die Riemenverbindung mit den Rollensträngen zu schaffen. Es kann weiterhin zweckmäßig sein, eine doppelte Riemenverbindung zwischen den Rollensträngen und dem Antriebsaggregat vorzusehen, um eine gleichmäßige Kraftübertragung und verringerte Torsionsschwingungen zu erzielen. Bevorzugt sind zwei Riemenverbindungen symmetrisch zur Prüfstandslängsachse vorgesehen, wobei das Antriebsaggregat zwischen den beiden Riemenverbindungen angeordnet ist und beide Riemenverbindungen antreibt. Die Welle des Antriebsaggregats kann an beiden Enden jeweils eine Riemenscheibe aufweisen, auf der der jeweilige (Zahn-) Riemen aufliegt.

Zur weiteren Verminderung von Torsionsschwingungen kann die Schwungmasse der Aufstandsrollen des angetriebenen Rollenstrangs größer als die Schwungmasse der Aufstandsrollen des zweiten Rollenstrangs sein. Durch die ungleiche Massenverteilung wird das Feder-Masse-System des Prüfstands und somit die Schwingungscharakteristik des Systems beeinflußt. Weiterhin haben auch die Federkonstante der Rollenstrangverbindung, insbesondere der Dehnungskoeffizient eines Riemens, und die Anordnung der Rollenstrangverbindung (symmetrisch/asymmetrisch) eine Auswirkung auf die Schwingungscharakteristik des Prüfstandsystems. Um die Schwingungseigenschaften des Prüfstands zu verbessern und die Störeinflüsse auf die Drehzahlmessung zu vermindern, können beispielsweise 70 % der Schwungmassen der Rollen im angetriebenen Rollenstrang und 30 % im zweiten Rollenstrang, vorgesehen sein. Durch gezielte Beeinflussung der Schwingungscharakteristik können auch Störeinflüsse durch Ungleichförmigkeiten oder Vibrationen und deren Übertragung zwischen den Rollensträngen durch die Kopplung der Rollenstränge vermindert werden.

In einer besonders bevorzugten Ausführungsform der Erfindung sind zwei Antriebsaggregate vorgesehen, die jeweils einen Rollenstrang antreiben. Jedes Antriebsaggregat, beispielsweise eine elektrische Drehstrommaschine, beschleunigt oder verzögert den zugeordneten Rollenstrang. Es ist vorteilhaft, wenn die jeweiligen Aufstandsrollen der Rollenstränge direkt an den Enden der durchgehenden Rotorwellen der Antriebsaggregate angebracht sind. Bei diesem Zweimotorenkonzept kann eine mechanische Rollenstrangverbindung entfallen. Das Feder-Masse-System dieser Ausführungsform weist keine nennenswerten elastischen Elemente auf. Bedingt durch die fehlende mechanische Kopplung der Rollenstränge werden die Torsionsschwingungen des Prüfstands verringert. Weiterhin werden die Prüfstandseigenverluste, insbesondere unter wechselnden Umweltbedingungen, sowie die Regeldynamik verbessert und die Gleichlaufstabilität erhöht. Durch den Einsatz von zwei Antriebsaggregaten kann weiterhin die Leistung des Prüfstands vergrößert werden bzw. es ist möglich, Antriebsaggregate mit kleinerer Leistung vorzusehen. Dies ist insbesondere von Vorteil, da bei der erfindungsgemäßen Mittelmotorausführung des Prüfstands Einschränkungen in der Baugröße der Antriebsaggregate bestehen.

Jeder Rollenstrang kann eine Meßeinrichtung zur Ermittlung der Drehgeschwindigkeit und/oder der Winkellage des Rollenstrangs aufweisen, um eine unabhängige Erfassung der Bewegungsgrößen der Rollenstränge zu ermöglichen. Die Steuereinheit regelt die Drehgeschwindigkeiten und/oder die Winkellagen der beiden Rollenstränge vorteilhafterweise derart, daß beide Rollenstränge eine gleiche Drehgeschwindigkeit und/oder Winkellage aufweisen. Da die Gleichlaufsynchronisierung der Aufstandsrollen durch eine elektrische Gleichlaufregelung ohne mechanische Rollenstrangverbindung erfolgt, wird eine sehr hohe Stabilität der Prüfstandseigenverluste erreicht.

Insbesondere zur Prüfung von Allradfahrzeugen kann der Rollenprüfstand auch zwei Sätze von jeweils zwei Rollensträngen aufweisen, wobei alle vier angetriebenen Fahrzeugräder auf jeweils einem Rollenpaar aufstehen. Die zur Prüfung von Allradfahrzeugen erforderliche Synchronisation aller Aufstandsrollen kann durch eine elektronische Gleichlaufregelung der Antriebsaggregate erfolgen.

Falls eine genaue Gleichlaufsynchronisation der Rollenstränge nicht erforderlich ist, sieht eine kostengünstige Variante der Erfindung vor, daß die Steuereinheit ein gemeinsames Stellglied aufweist, das beide Antriebsaggregate ansteuert. In diesem Fall werden beide Motoren mit einer gemeinsamen Leistungseinheit betrieben, d.h., daß beispielsweise zwei parallel geschaltete Elektromotoren mit den gleichen Steuersignalen versorgt werden. Dabei kann die Drehzahlregelung einen vorgegebenen Wert für die Drehgeschwindigkeit eines Rollenstrangs einregeln oder den Mittelwert der Drehgeschwindigkeiten der beiden Rollenstränge als Regelgröße berücksichtigen.

Vorzugsweise ist die Welle eines Rollenstrangs mittels geeigneter Wälzlager drehbar gelagert. Um die auf die Fahrzeugräder wirkenden Kräfte möglichst genau zu bestimmen, sind geringe und möglichst konstante Lagerreibungsverluste erforderlich. Es ist deshalb vorteilhaft, die Lagerungen zu beheizen, um konstante Prüfstandseigenverluste auch bei wechselnden Umweltbedingungen zu erzielen, wie sie z.B. in einer Kältekammer auftreten.

Eine besonders vorteilhafte Ausgestaltung der Erfindung sieht vor, den Stator des Antriebsaggregats pendelnd drehbar zu lagern. Zur beiderseitigen Lagerung des Statorgehäuses im Prüfstandrahmen kann das Statorgehäuse an jeder Stirnseite einen Hohlzapfen aurweisen, in denen über innere Wälzlager die Rotorwelle gelagert ist. Gegenüber dem Prüfstandrahmen ist jeder Hohlzapfen über ein weiteres radial äußeres Wälzlager gelagert. Das von dem Antriebsaggregat auf die Aufstandsrollen ausgeübte Moment kann als Reaktionsmoment des Statorgehäuses von einem Drehmoment- bzw. Kraftsensor erfaßt werden. Die Reibung der Rotorwellenlager wird somit von der Meßeinrichtung erfaßt und kann automatisch kompensiert werden. Die Rotorwellenlager befinden sich innerhalb der Meß- oder Regelkette. Somit können auch bei Wechsel der Betriebsarten (Dauerbetrieb, Kurzzeitbetrieb) oder unterschiedlichen Umweltbedingungen (z.B. Temperatur, Luftdruck) die Prüfstandseigenverluste erfaßt und kompensiert werden.

Zur Erfassung des Statorreaktionsmoments ist der Stator vorzugsweise über eine Drehmomentstütze und eine Krafmeßeinrichtung am Prüfstandrahmen abgestützt. Aus der erfaßten Kraft und den Abmessungen der Drehmomentstütze kann auf einfache Weise das vom pendelnd drehbar gelagerten Antriebsaggregat auf den Rollenstrang ausgeübte Drehmoment ermittelt werden. Als Kraftmeßeinrichtung kann eine Kraftmeßdose, die bevorzugt schwimmend am Rahmen des Prüfstands abgestützt ist, herangezogen werden. Durch die schwimmende Abstützung der Kraftmeßdose wird die Meßgenauigkeit erhöht, da Reibungen und Verkantungen vermieden werden. Das gemessene Drehmoment bzw. die ermittelte Kraft kann zur Steuerung des Antriebsaggregats und/oder zur Kalibrierung/Justierung der Steuereinheit und/oder zur Kompensation der Rotorwellenlagerreibung verwendet werden. Weiterhin können diverse Fahrzeugeigenschaften, wie z.B. Bremskraft oder Antriebsleistung, basierend auf dem erfaßten Drehmoment bzw. der Kraft ermittelt werden.

Um Verschleißerscheinungen der Lagerteile bei der pendelnden Lagerung des Stators zu vermeiden, kann der Stator mit gegenläufig angetriebenen Lagern gelagert sein. Hierbei sind zwei Wälzlager unter Zwischenschaltung eines Mittelringes koaxial übereinander angeordnet,

wobei die Mittelring der an den beiden Stirnseiten des Antriebsaggregats angeordneten Lager gegensinnig rotieren, um das durch die Drehung der Mittelringe erzeugte Moment zu kompensieren. Der Antrieb für die drehenden Mittelringe kann wahlweise einzeln erfolgen oder eine einzelne Antriebsmaschine für alle Mittelringe aufweisen, die beispielsweise über einen Riementrieb die Mittelringe antreibt.

Um die Lagerreibung des zweiten, nicht angetriebenen Rollenstrangs zu erfassen, ist es zweckmäßig, die Welle des zweiten Rollenstrangs pendelnd drehbar zu lagern. Bei dieser pendelnd drehbaren Lagerung können sich, ähnlich wie bei der pendelnden Lagerung des Statorgehäuses, die äußeren Lagerschalen der Rotorwellenlager in einem Gehäuse befinden, das über ein äußeres Lager im Prüfstandrahmen gelagert ist. Zur Vermeidung von Lagerschäden in dem äußeren, stehenden Lager kann dieses ebenfalls als eine doppelte Lagerung mit rotierendem Mittelring ausgeführt werden. Durch einen am Lagergehäuse angebrachten Drehmomentsensor kann das Drehmoment des zweiten Rollenstrangs erfaßt werden. Da sowohl die Lagerreibungen des ersten, angetriebenen Rollenstrangs als auch die des zweiten Rollenstrangs erfaßt werden können, sind keine undefinierten Lagerreibungen im Prüfstand vorhanden und es ist möglich, die Reibungsverluste des Gesamtprüfstands zu kompensieren. Dies kann durch ein entsprechendes Erfassen der Reibungsverlust für die jeweiligen Prüfstandbedingungen und ein Justieren/Kalibrieren der Steuereinheit oder durch eine Regelung der gewünschten Drehmomente durch die Steuereinheit erfolgen.

Eine weitere Ausgestaltung der Erfindung sieht vor, daß der pendelnd drehbar gelagerte Stator des zweiten Antriebsaggregats oder die pendelnd drehbar gelagerte Welle des zweiten Rollenstrangs über eine zweite Drehmomentstütze auf die Kraftmeßeinrichtung wirkt. Durch die mechanische Verbindung des zweiten Statorgehäuses oder des Lagergehäuses des zweiten Rollenstrangs mit der Kraftmeßeinrichtung kann eine mechanische Addition der Kräfte an der Kraftmeßdose erfolgen. Durch eine geeignete Gestaltung der Drehmomentstützen können die Lagerreibungsverluste des gesamten Prüfstands erfaßt und automatisch kompensiert werden.

In einer zweckmäßigen Ausgestaltung des Rollenprüfstands sind die Lagerungen der Rollenstränge zwischen den Aufstandsrollen angeordnet. Durch die Anordnung des Antriebsaggregats in einem Bereich zwischen den Aufstandsrollen ist es nicht notwendig, Lagerungen an den axial äußeren Enden der Rollenstränge vorzusehen. Somit kann die Anzahl der Lager und die damit verbundenen Lagerreibungsverluste reduziert werden. Auch ist es möglich, einen besonders kompakten Prüfstand mit geringen Abmessungen zu realisieren.

Durch die erfindungsgemäße Anordnung des Antriebsaggregats kann ein kompakter Rollenprüfstand mit verminderten Reibungsverlusten und geringerer Neigung zu Torsionsschwingungen erzielt werden. Weiterhin ist es möglich, eine störungsfreiere Erfassung der Rollendrehzahlen bzw. -geschwindigkeiten und somit eine genauere Berechnung der Rollenbeschleunigungen zur Simulation von Fahrwiderständen und/oder von rotierenden Massen zu erzielen. Der erfindungsgemäße Rollenprüfstand ermöglicht es außerdem, die variablen Lagerreibungsverluste zu erfassen und zu kompensieren.

Weitere Besonderheiten und Vorzüge der Erfindung lassen sich den Zeichnungen und der folgenden Beschreibung bevorzugter Ausführungsbeispiele entnehmen. Es zeigen:

Fig. 1    eine schematische Darstellung eines Doppelrollenprüfstands in Mittelmotorausführung;

Fig. 2    eine schematische Darstellung eines Doppelrollenprüfstands mit pendelnd drehbarer Lagerung des zweiten Rollenstrangs;

Fig. 3    eine schematische Darstellung eines Doppelrollenprüfstands mit zwei Antriebsaggregaten;

Fig. 4    eine schematische Darstellung eines Schnitts durch einen Rollenstrang mit pendelnd drehbarer Lagerung des Statorgehäuses;

Fig. 5    eine schematische Darstellung eines Schnitts durch einen Rollenstrang mit doppelter Lagerung des Statorgehäuses; und

Fig. 6    eine schematische Darstellung eines herkömmlichen Doppel-rollenprüfstands.

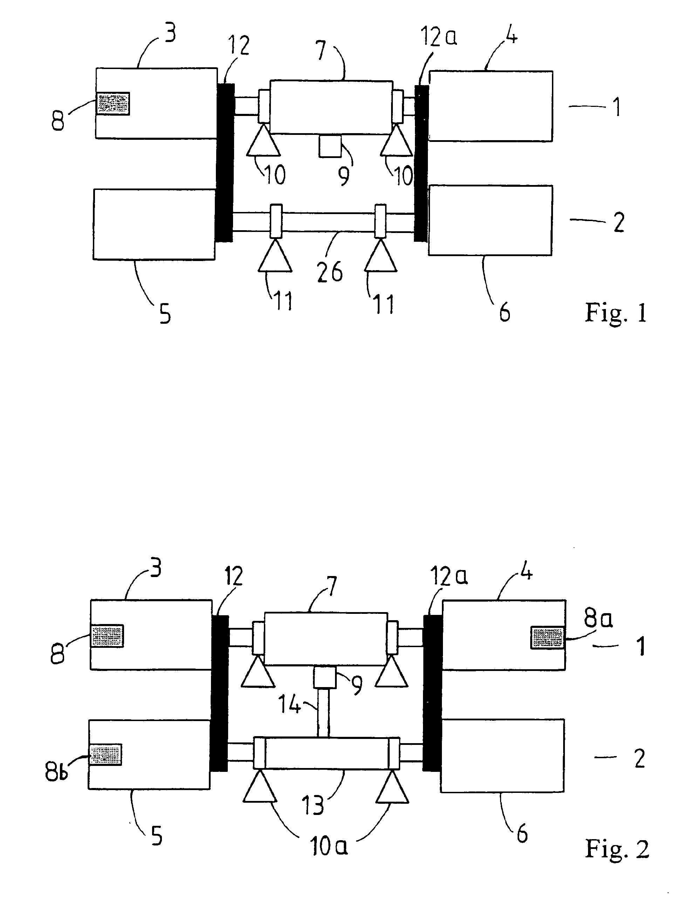

Die Fig. 1 zeigt eine schematische Darstellung eines Doppelrollenprüfstands in Mittelmotorausführung mit einem Antriebsaggregat. Der Rollenprüfstand weist einen ersten Rollenstrang 1 mit Aufstandsrollen 3, 4 und einen zweiten Rollenstrang 2 mit Aufstandsrollen 5, 6 auf. Die Räder einer Achse des zu prüfenden Fahrzeugs stehen jeweils auf einem Rollenpaar 3, 5 oder 4, 6 auf. Nach dem Auffahren des Fahrzeugs auf den Prüfstand befinden sich die Fahrzeugräder im jeweiligen Rollenprisma der Rollenpaare und werden von den sich drehenden Rollen 3, 4, 5, 6 beschleunigt oder verzögert. Zur Fixierung des Fahrzeugs auf dem Prüfstand sind in der Regel in Fig. 1 nicht gezeigte Haltevorrichtungen vorgesehen. Zur Prüfung von Allradfahrzeugen ist es möglich, zwei Rollensätze mit jeweils zwei Rollensträngen vorzusehen.

Die Simulation von Fahrwiderstandskräften an den Fahrzeugrädern erfolgt gemäß folgender Gleichung,

$$F = f_0 + (f_1 * v) + (f_2 * v^2) + (f_3 * v^n) + m_g * (dv/dt) + (m_g * g * \sin\alpha),$$

wobei folgendes gilt:

F:        Zugkraftsollwert

$f_0$:       konstanter Koeffizient (Rollwiderstandsanteil)

$f_1$:       linearer Koeffizient (Walkwiderstandsanteil)

$f_2$:       exponentieller Koeffizient (Luftwiderstandsanteil mit n = 2)

$f_3$:       exponentieller Koeffizient (Exponent variabel)

n:        Exponent ($1 \leq n \leq 3$, eine Nachkommastelle)

$m_g$:       Statische Fahrzeugmasse (Fahrzeuggewicht)

v:        Rollengeschwindigkeit

dv/dt:   Rollenbeschleunigung

g:        Erdbeschleunigung

$\sin\alpha$:    Steigungswinkel ($\pm$).

Die Rollendurchmesser der Aufstandsrollen 3, 4, 5 ,6 betragen vorzugsweise 20 Zoll (508 mm), 500 mm oder 220 bis 550 mm in der Abgasmeßtechnik. Zur Messung der Abgasemissionen des Fahrzeugs wird dieses auf dem Prüfstand einem vorgegebenen Prüfzyklus mit definierten Fahrwiderstandskräften unterworfen, wobei die Abgasentwicklung des Fahrzeugs durch eine Abgasmeßeinrichtung erfaßt wird.

Zum Antreiben oder Verzögern der Aufstandsrollen 3, 4, 5, 6 ist ein Antriebsaggregat 7 vorgesehen, das zwischen den beiden Aufstandsrollen 3, 4 des ersten Rollenstrangs 1 angeordnet ist. Durch die mittige Kraft- bzw. Drehmoment-Einleitung in den Rollenstrang 1 werden Drehschwingungen zwischen den Aufstandsrollen 3, 4 vermindert. Die Aufstandsrollen 3, 4 sind an den axialen Enden einer Rotorwelle 17 des Elektromotors 7 angebracht. Der Motor 7 zum Antreiben des ersten Rollenstrangs 1 ist bevorzugt ein elektrischer Drehstrommotor, da dieser eine einfache Regelung der Drehzahl und des Drehmoments ermöglicht. Zur Drehmomentmessung ist eine Drehmomentmeßeinrichtung 9 an dem pendelnd drehbar gelagerten Antriebsaggregat 7 angebracht. Durch die Messung des vom Motor 7 auf die Rotorwelle 17 wirkenden Drehmoments kann eine besonders genaue Simulation von Fahrwiderstandskräften erfolgen. Weiterhin können auch Beschleunigungs- oder Verzögerungskräfte, die von den Fahrzeugrädern auf die Aufstandsrollen eingeleitet werden, erfaßt werden und der Prüfstand kann auch zur Bremsenprüfung oder zur Leistungsmessung herangezogen werden. Selbstverständlich sind noch andere Einsatzmöglichkeiten für den erfindungsgemäßen Rollenprüfstand möglich.

Eine Drehzahlmeßeinrichtung 8 ist an einer Aufstandsrolle 3 vorgesehen, um die Drehgeschwindigkeit und/oder die Winkellage des Rollenstrangs 1 zu ermitteln. Anhand dieses Drehzahlsignals kann eine Steuereinheit 16 die Drehgeschwindigkeit und/oder die Winkellage des Rollenstrangs 1 regeln.

Durch Differenzieren der Geschwindigkeit kann auch die Rollenbeschleunigung für die elektrische Massensimulation ermittelt werden. Anhand des zweiten Newtonschen Gesetzes wird eine Kraft ermittelt, die vom Antriebsaggregat 7 über die Aufstandsrollen 3, 4, 5, 6 auf die Fahrzeugräder aufgebracht wird, um eine Differenzmasse zwischen der mechanischen Prüfstandträgheit und der Fahrzeugmasse zu simulieren. Da die rotierenden Massen der Aufstandsrollen bzw. deren Massenträgheitsmomente gegenüber den anderen rotierenden Massen des Prüfstands dominieren, können letztere bei der elektrischen Massensimulation weitgehend vernachlässigt werden. Durch die großen zu simulierenden Massen bei einem Doppelrollenprüfstand mit relativ kleinen Aufstandsrollen entstehen hohe Anforderungen an die Genauigkeit der Drehzahl bzw. Geschwindigkeitsmeßeinrichtung 8. Um eine genaue und zeitlich hochauflösende Geschwindigkeitsmessung zu erzielen, werden deshalb bevorzugt Sinus/Kosinus-Encoder herangezogen. Die Berechnung der Beschleunigung erfolgt mindestens zweihundertmal pro Sekunde durch Differenzieren der erfaßten Geschwindigkeit.

Die Welle 26 des zweiten Wellenstrangs 2 ist mittels Wälzlager 11 drehbar gelagert, während die Lagerung des ersten Rollenstrangs 1 eine pendelnd drehbare Lagerung 10 des Motorstators vorsieht, um die Reibungsverluste der Motorlager durch die Meßeinrichtung 9 zu erfassen und automatisch zu kompensieren. Durch die Kompensation der Prüfstandseigenverluste sind genaue Simulationen von Fahrwiderstandskräften bei wechselnden Betriebsbedingungen möglich.

Mechanische Rollenstrangverbindungen 12, 12a verbinden den ersten Rollenstrang 1 mit dem zweiten Rollenstrang 2. Die Rollenstrangverbindungen 12, 12a können beispielsweise durch einen Riemen oder eine Kette erfolgen und treiben den zweiten Rollenstrang 2 synchron mit der Drehbewegung des ersten Rollenstrangs 1 an. Durch die symmetrische Verbindung zwischen den Rollensträngen werden Drehschwingungen zwischen den Rollensträngen 1, 2 vermindert.

Die Fig. 2 zeigt eine schematische Darstellung eines Rollenprüfstands mit pendelnd drehbarer Lagerung der Welle 26 des zweiten Rollenstrangs 2. Die Lagerung der Welle 26 des zweiten Rollenstrangs 2 kann ähnlich wie die pendelnde Lagerung des Statorgehäuses des Motors 7 erfolgen. Ein Gehäuse 13 nimmt die inneren Lager 18 der Rollenstrangwelle 26 auf und ist über die äußere Lagerung 10a schwimmend gelagert. Zur Vermeidung von Lagerschäden dieser äußeren Lagerung 10a kann diese durch eine doppelte Lagerung mit einem rotierenden Mittelring zwischen den beiden Wälzlagern ausgebildet sein. Zur Kompensation der durch die rotierenden Mittelringe der doppelten, koaxial angeordneten Wälzlager auftretenden Kräfte und Momente ist es vorteilhaft, wenn die Mittelringe gegenläufig angetrieben werden. Der Antrieb der rotierenden Mittelringe kann beispielsweise über Riemen erfolgen, die eine Drehbewegung eines Hilfsmotors übertragen. Auch die pendelnde Lagerung des Stators des Antriebsaggregats 7 kann mittels gegenläufig angetriebenem Lager erfolgen.

Zur Erfassung des Gesamtmoments der beiden Rollenstränge 1, 2 bzw. der gesamten Prüfstandsverluste ist eine Drehmomentstütze 14 vorgesehen, die auf die Meßeinrichtung 9 wirkt. Außer dieser mechanischen Addition der Kräfte bzw. Drehmomente ist es selbstverständlich auch möglich, eine zweite Meßeinrichtung zur Erfassung des Drehmoments bzw. der Lagerreibung des zweiten Rollenstrangs 2 vorzusehen und eine elektronische Berechnung der erfaßten Momente bzw. Kräfte durchzuführen.

Durch das Vorsehen einer zweiten Rollenstrangverbindung 12, die symmetrisch zur Prüfstandsmittelachse vorgesehen ist, kann eine symmetrische Aufteilung des Kraftflusses und somit eine Verringerung der Torsionsschwingungen erzielt werden. Die Schwingungscharakteristik des Prüfstands kann weiterhin durch eine asymmetrische Massenaufteilung verbessert werden, um zusätzlich die Torsionsschwingungen zu reduzieren. Eine günstige asymmetrische Massenaulteilung sieht vor, beispielsweise 70 % der Schwungmassen der Aufstandsrollen im ersten Rollenstrang 1 und 30 % der Schwungmassen im zweiten Rollenstrang 2 anzuordnen. Durch die asymmetrische Massenaufteilung werden Torsionsschwingungen vermindert und der Einfluß von Vibrationen und Unwuchten bzw. Ungleichförmigkeiten auf die Drehzahlmessung verringert.

In dem in Fig. 2 gezeigten Prüfstand ist weiterhin ein zweiter Drehzahlsensor 8a vorgesehen, der derart angeordnet ist, daß eventuell auftretende Störsignale gegenphasig auf den beiden Drehzahlsignalen auftreten. Durch eine Überlagerung der beiden Drehzahlsignale kann die Drehzahlmessung verbessert und stabilisiert werden. Insbesondere wird durch das Anbringen des zweiten Drehzahlsensors 8a am anderen axialen Ende des ersten Rollenstrangs 1 der Einfluß von eventuell verbleibenden Torsionsschwingungen zwischen den Drehmassen der Aufstandsrollen 3, 4 in dem ersten Rollenstrang 1 vermindert.

Zum Ausgleich der Drehschwingungen des ersten Rollenstrangs 1 zum zweiten Rollenstrang 2 ist ein dritter Drehzahlsensor 8b an der Aufstandsrolle 5 des zweiten Rollenstrangs 2 vorgesehen. Der Sensor 8b erfaßt die Drehgeschwindigkeit des zweiten Rollenstrangs 2, die in der Steuereinheit 16 mit der vom ersten Drehzahlsensor 8 erfaßten Drehgeschwindigkeit des ersten Rollenstrangs 1 arithmetisch gemittelt wird. Zur elektrischen Simulation von Massen ist es auch möglich, zuerst die Beschleunigung der beiden Rollenstränge 1, 2 zu berechnen und diese anschließend arithmetisch zu mitteln.

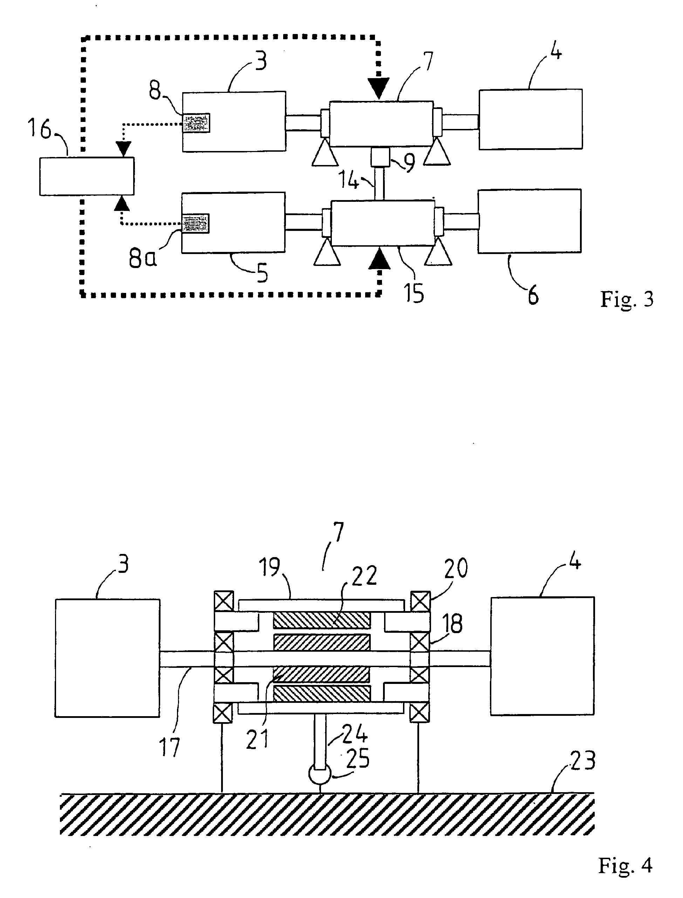

Die Fig. 3 zeigt eine schematische Darstellung eines Doppelrollenprüfstands mit zwei Antriebsaggregaten 7, 15, die jeweils einen Rollenstrang 1, 2 antreiben. Jeder Rollenstrang 1, 2 weist eine eigene Meßeinrichtung 8, 8b zur Ermittlung der Drehgeschwindigkeit und/oder der Winkellage des Rollenstrangs auf. Basierend auf den Signalen der Meßeinrichtungen 8, 8b regelt die Steuereinheit 16 die Drehgeschwindigkeiten und/oder die Winkellagen der beiden Rollenstränge 1, 2 derart, daß beide Rollenstränge 1, 2 eine gleiche Drehgeschwindigkeit und/oder Winkellage aufweisen.

Zum Ausgleich von etwaigen Schwingungen zwischen den Drehmassen (Aufstandsrollen) der beiden Rollenstränge 1, 2 können die erfaßten Geschwindigkeiten bzw. die berechneten Beschleunigungen der Rollenstränge arithmetisch gemittelt werden. Die mittlere Rollenbeschleunigung kann dann für eine genaue Massensimulation herangezogen werden.

Die Statoren der beiden Antriebsaggregate 7, 15 sind jeweils mittels Lagerungen 10 pendelnd drehbar gelagert. Eine Drehmomentstütze 14 verbindet den Stator des zweiten Motors mit der Drehmomentmeßvorrichtung 9. Durch die mechanische Drehmomentaddition kann das gesamte Drehmoment der Antriebsaggregate 7, 15 ermittelt werden. Alternativ können auch getrennte Drehmomentmeßeinrichtungen für die beiden Rollenstränge 1, 2 vorgesehen sein. In diesem Fall ist es auch möglich, die Drehmomente bzw. Kräfte der einzelnen Rollenstränge 1, 2 getrennt zu regeln.

Da in diesem Ausführungsbeispiel keine mechanische Rollenstrangverbindung erforderlich ist, und der Gleichlauf der Aufstandsrollen 3, 4, 5, 6 durch eine elektronische Gleichlaufregelung in der Steuereinheit 16 realisiert wird, sind beide Rollenstränge 1, 2 mechanisch entkoppelt, wodurch das System eine geringere Schwingungsneigung aufweist. Insbesondere treten geringere Torsionsschwingungen auf, da eine elastische Kopplung zwischen den Rollensträngen 1, 2 fehlt, die Antriebskräfte mittig in die Rollenstränge eingeleitet werden und der maximale Abstand zwischen der Krafteinleitung in die Rollenstrangwellen 17, 26 und der Belastung der Rollenstrangwellen 17, 26 verringert ist. Durch den Einsatz des zweiten Antriebsaggregats 15 kann zudem die gesamte Leistung des Prüfstands vergrößert werden.

Die Fig. 4 zeigt schematisch einen Schnitt durch einen Rollenstrang. Die Aufstandsrollen 3, 4 sind an den axialen Enden der durchgehenden, einstückigen Rotorwelle 17 des Antriebsaggregats 7 angebracht.

Die pendelnde drehbare Lagerung des Statorgehäuses 19 erfolgt durch die äußeren Wälzlager 20, die das Statorgehäuse 19 in dem Prüfstandrahmen 23 lagern. Die Rotorwelle 17 ist im Statorgehäuse 19 durch die inneren Wälzlager 18 drehbar gelagert. Die Rotorwicklungen 21 des elektrischen Antriebsaggregats 7 sind fest mit einer Rollenstrangwelle 17 verbunden. Die Statorwicklungen 22 befinden sich auf der Innenseite des Statorgehäuses 19. Das Statorgehäuse 19 ist über eine Drehmomentstütze 24 und eine Kraftmeßdose 25 am Prüfstandrahmen 23 abgestützt. Das Reaktionsmoment des Statorgehäuses 19 wird über die Kraftmeßeinrichtung 25 erfaßt. Die Rotorwelle ist einstückig mit der Rollenstrangwelle 17 ausgebildet, was zu einer torsions- und durchbiegungsarmen Lagerung sowohl des Antriebsaggregats 7 als auch der Aufstandsrollen 3, 4 führt.

Die Fig. 5 zeigt eine schematische Darstellung eines Schnitts durch einen Rollenstrang mit doppelter, angetriebener Lagerung. Bei diesem ist zur Vermeidung von Lagerschäden von stehenden Lagern ein weiteres Wälzlager 28 koaxial über dem Lager 20 angeordnet und ein Mittelring 27 wird zwischen diesen Lagern 20, 28 angetrieben. Auf diese Weise kann vermieden werden, daß sich die Wälzkörper in die Lagerschalen eingraben oder Schmierfilm in den Wälzlagern abreißt.

Die Fig. 6 zeigt schematisch einen herkömmlichen Doppelrollenprüfstand mit einer Inline-Anordnung des Antriebsaggregats 7 außerhalb der Aufstandsrollen 3, 4, 5, 6. Bedingt durch die ungünstigen Schwingungseigenschaften des Feder-Masse-Systems neigt ein derartiger Prüfstand zu verstärkten Torsionsschwingungen, die wiederum zu unstabilen Drehzahlmessungen führen. Weiterhin ist eine Vielzahl von Lagerungen 11 vorhanden, die große und unstabile Prüfstandseigenverluste zur Folge haben. Bedingt durch die seitliche Anordnung des Antriebsaggregats 7 weist ein herkömmlicher Prüfstand eine wesentlich größere Breite als das zu prüfende Fahrzeug auf und kann deshalb nicht auf einem LKW oder einem Anhänger montiert werden.

Die beschriebenen Maßnahmen zur können zur Verringerung von Torsionsschwingungen oder zur Verbesserung der Drehzahlsignale auch zusammen mit anderen Rollenprüfständen verwendet werden.

## Patentansprüche

1. Rollenprüfstand für Kraftfahrzeuge mit
   zwei drehbaren Rollensträngen (1, 2) mit Aufstandsrollen (3, 4, 5, 6), wobei die Räder einer Achse des Fahrzeugs jeweils auf einem Rollenpaar bestehend aus einer Aufstandsrolle (3, 4) des ersten Rollenstrangs (1) und einer Aufstandsrolle (5, 6) des zweiten Rollenstrangs (2) aufstehen,
   mindestens einem Antriebsaggregat (7, 15) zum Antreiben oder Verzögern von zumindest einem Rollenstrang (1,2) und
   einer Steuereinheit (16) für das Antriebsaggregat (7, 15),
   wobei das Antriebsaggregat (7, 15) in einem Bereich angeordnet ist, der durch die axial innen liegenden Enden der Aufstandsrollen (3, 4, 5, 6) begrenzt ist, wobei das Antriebsaggregat (7)
   über eine, insbesondere mittig angeordnete Riemenverbindung mit zumindest einem Rollenstrang (1,2) verbunden ist und diesen antreibt oder verzögert.

**2.** Rollenprüfstand nach Anpruch 1, wobei das Antriebsaggregat (7) zwischen den beiden Aufstandsrollen (3, 4) des ersten Rollenstrangs (1) angeordnet ist.

**3.** Rollenprüfstand nach Anpruch 3, wobei die Drehachse der Aufstandsrollen (3, 4) des angetriebenen Rollenstrangs (1) mit der Drehachse einer Rotorwelle des Antriebsaggregats (7) übereinstimmt.

**4.** Rollenprüfstand nach einem der Anprüche 1 bis 4, wobei zumindest ein Rollenstrang eine Meßeinrichtung (8) zur Ermittlung der Drehgeschwindigkeit und/oder der Winkellage des Rollenstrangs aufweist und die Steuereinheit (16) die Drehgeschwindigkeit und/oder die Winkellage regelt.

**5.** Rollenprüfstand nach Anspruch 5, wobei mehrere Meßeinrichtungen (8, 8a, 8b) vorgesehen sind, deren Signale addiert oder gemittelt werden.

**6.** Rollenprüfstand nach einem der Anprüche 1 bis 6, wobei mindestens eine Kraft- bzw. Drehmomentmeßeinrichtung (9) vorgesehen ist, die die Kraft bzw. das Drehmoment ermittelt, die bzw. das von dem Antriebsaggregat (7) aufgebracht wird.

**7.** Rollenprüfstand nach einem der Anprüche 1 bis 7, wobei zumindest eine Rollenstrangverbindung (12, 12a), insbesondere ein Riemen oder eine Kette, zum Antreiben des zweiten Rollenstrangs (2) vorgesehen ist.

**8.** Rollenprüfstand nach Anspruch 8, wobei die Schwungmasse der Aufstandsrollen (3, 4) des angetriebenen Rollenstrangs (1) größer als die Schwungmasse der Aufstandsrollen (5, 6) des zweiten Rollenstrangs (2) ist.

**9.** Rollenprüfstand nach einem der Anprüche 1 bis 7, wobei zwei Antriebsaggregate (7, 15) vorgesehen sind, die jeweils einen Rollenstrang antreiben.

**10.** Rollenprüfstand nach Anpruch 10, wobei jeder Rollenstrang (1, 2) eine Meßeinrichtung (8, 8a, 8b) zur Ermittlung der Drehgeschwindigkeit und/oder der Winkellage des Rollenstrangs (1, 2) aufweist.

**11.** Rollenprüfstand nach Anpruch 11, wobei die Steuereinheit (16) die Drehgeschwindigkeiten und/oder die Winkellagen der beiden Rollenstränge (1, 2) derart regelt, daß beide Rollenstränge (1, 2) eine gleiche Drehgeschwindigkeit und/oder Winkellage aufweisen.

**12.** Rollenprüfstand nach Anpruch 10, wobei die Steuereinheit (16) ein gemeinsames Stellglied aufweist, das beide Antriebsaggregate (7, 15) ansteuert.

**13.** Rollenprüfstand nach zumindest einem der Anprüche 1 bis 13, wobei die Welle (26) eines Rollenstrangs mittels Wälzlager (11) drehbar gelagert ist.

**14.** Rollenprüfstand nach zumindest einem der Anprüche 1 bis 13, wobei ein Stator (19) des Antriebsaggregats (7, 15) pendelnd drehbar gelagert ist.

**15.** Rollenprüfstand nach Anpruch 15, wobei der Stator (19) mittels angetriebenen Lagern (10), insbesondere gegenläufig angetriebenen Lagern, gelagert ist.

**16.** Rollenprüfstand nach Anpruch 15 oder 16, wobei der Stator (19) über eine Drehmomentstütze (24) und eine Kraftmeßeinrichtung (25) abgestützt ist.

**17.** Rollenprüfstand nach zumindest einem der Anprüche 1 bis 17, wobei die Welle (26) des zweiten Rollenstrangs (2) pendelnd drehbar, insbesondere mit gegenläufig angetriebenen Lagern, gelagert ist.

**18.** Rollenprüfstand nach Anpruch 17 oder 18, wobei der pendelnd drehbar gelagerte Stator (19) des zweiten Antriebsaggregats (15) oder die pendelnd drehbar gelagerte Welle (26) des zweiten Rollenstrangs über eine zweite Drehmomentstütze (14) auf die Kraftmeßeinrichtung (9) wirkt.

**19.** Rollenprüfstand nach zumindest einem der Ansprüche 1 bis 19, wobei die Lagerungen (10, 11) der Rollenstränge (1,2) zwischen den Aufstandsrollen (3, 4, 5, 6) angeordnet sind.

**20.** Rollenprüfstand nach zumindest einem der Ansprüche 1 bis 20, wobei eine einstückige Rollenstrangwelle (17) vorgesehen ist, die die Drehachse der Aufstandsrollen (3, 4) bildet und mit der Rotorwelle übereinstimmt.

**21.** Rollenprüfstand nach zumindest einem der Ansprüche 1 bis 21, wobei durch Beschleunigung der Rollenstränge (1, 2) eine Massensimulation zum Anpassen der rotierenden Prüfstandmasse an die Masse des zu prüfenden Kraftfahrzeugs erfolgt.

**Claims**

**1.** A roller dynamometer for motor vehicles, including
two rotatable roller strings (1, 2) with footing rollers (3, 4, 5, 6), wherein the wheels of an axle of the vehicle each rest on a roller pair consisting of a footing roller (3, 4) of the first roller string (1) and a footing roller (5, 6) of the second roller string (2),
at least one drive assembly (7, 15) for driving or decelerating at least one roller string (1, 2), and
a controller (16) for the drive assembly (7, 15), wherein the drive assembly (7, 15) is disposed in a region bordered by the axially inboard ends of the footing rollers (3, 4, 5, 6), wherein the drive assembly (7) is connected to and drives or decelerates at least one roller string (1, 2) via an in particular centrally disposed belt connection.

**2.** The roller dynamometer according to claim 1, wherein the drive assembly (7) is disposed between the two footing rollers (3, 4) of the first roller string (1).

**3.** The roller dynamometer according to claim 3, wherein the rotation axis of the footing rollers (3, 4) of the driven roller string (1) coincides with the rotation axis of a rotor shaft of the drive assembly (7).

**4.** The roller dynamometer according to any one of claims 1 to 4, wherein at least one roller string has a measuring device (8) for determining the rotational speed and/or the angular position of the roller string and the controller (16) regulates the rotational speed and/or the angular position.

**5.** The roller dynamometer according to claim 5, wherein a plurality of measuring devices (8, 8a, 8b) are provided, the signals of which are added up or averaged.

**6.** The roller dynamometer according to any one of claims 1 to 6, wherein at least one force or torque measuring device (9) is provided, which determines the force or the torque, which is applied by the drive assembly (7).

**7.** The roller dynamometer according to any one of claims 1 to 7, wherein at least one roller string connection (12, 12a), in particular a belt or a chain, is provided for driving the second roller string (2).

**8.** The roller dynamometer according to claim 8, wherein the gyrating mass of the footing rollers (3, 4) of the driven roller string (1) is greater than the gyrating mass of the footing rollers (5, 6) of the second roller string (2).

**9.** The roller dynamometer according to any one of claims 1 to 7, wherein two drive assemblies (7, 15) are provided, which each drive a roller string.

**10.** The roller dynamometer according to claim 10, wherein each roller string (1, 2) has a measuring device (8, 8a, 8b) for determining the rotational speed and/or the angular position of the roller string (1,2).

**11.** The roller dynamometer according to claim 11, wherein the controller (16) regulates the rotational speeds and/or the angular positions of the two roller strings (1, 2) such that both roller strings (1, 2) have an equal rotational speed and/or angular position.

**12.** The roller dynamometer according to claim 10, wherein the controller (16) has a common actuator driving both drive assemblies (7,15).

**13.** The roller dynamometer according to at least one of claims 1 to 13, wherein the shaft (26) of a roller string is rotatably supported by means of rolling bearings (11).

**14.** The roller dynamometer according to at least one of claims 1 to 13, wherein a stator (19) of the drive assembly (7, 15) is oscillatingly rotatably supported.

**15.** The roller dynamometer according to claim 15, wherein the stator (19) is supported by means of driven bearings (10), in particular oppositely driven bearings.

**16.** The roller dynamometer according to claim 15 or 16, wherein the stator (19) is supported through a torque support (24) and a force measuring device (25).

**17.** The roller dynamometer according to at least one of claims 1 to 17, wherein the shaft (26) of the second roller string (2) is oscillatingly rotatably supported, in particular with oppositely driven bearings.

**18.** The roller dynamometer according to claim 17 or 18, wherein the oscillatingly rotatably supported stator (19) of the second drive assembly (15) or the oscillatingly rotatably supported shaft (26) of the second roller string acts on the force measuring device (9) through a second torque support (14).

**19.** The roller dynamometer according to at least one of claims 1 to 19, wherein the bearings (10, 11) of the roller strings (1, 2) are disposed between the footing rollers (3, 4, 5, 6).

**20.** The roller dynamometer according to at least one of claims 1 to 20, wherein a one-piece roller string shaft (17) is provided, which constitutes the rotation axis of the footing rollers (3, 4) and coincides with the rotor shaft.

**21.** The roller dynamometer according to at least one of claims 1 to 21, wherein a mass simulation for adapting the rotating dynamometer mass to the mass of the motor vehicle to be tested is effected by accelerating the roller strings (1, 2).

**Revendications**

**1.** Banc d'essai à rouleaux pour des véhicules automobiles, comportant :

deux blocs de rouleaux rotatifs (1, 2) avec des rouleaux de contact (3, 4, 5, 6), dans lequel les roues d'un essieu du véhicule reposent respectivement sur une paire de rouleaux constituée d'un rouleau de contact (3, 4) du premier bloc de rouleaux (1) et d'un rouleau de contact (5, 6) du second bloc de rouleaux (2),
au moins une unité d'entraînement (7, 15) pour entraîner ou ralentir au moins un bloc de rouleaux (1, 2) et une unité de commande (16) pour l'unité d'entraînement (7, 15),
dans lequel l'unité d'entraînement (7, 15) est agencée dans une zone qui est délimitée par les extrémités situées axialement à l'intérieur des rouleaux de contact (3, 4, 5, 6), dans lequel l'unité d'entraînement (7) est reliée à au moins un bloc de rouleaux (1, 2) par une liaison par courroie, en particulier agencée au centre, et entraîne ou ralentit celui-ci.

**2.** Banc d'essai à rouleaux selon la revendication 1, dans lequel l'unité d'entraînement (7) est agencée entre les deux rouleaux de contact (3, 4) du premier bloc de rouleaux (1).

**3.** Banc d'essai à rouleaux selon la revendication 3, dans lequel l'axe de rotation des rouleaux de contact (3, 4) du bloc de rouleaux entraîné (1) correspond à l'axe de rotation d'un arbre de rotor de l'unité d'entraînement (7).

**4.** Banc d'essai à rouleaux selon l'une quelconque des revendications 1 à 4, dans lequel au moins un bloc de rouleaux comporte un dispositif de mesure (8) pour déterminer la vitesse de rotation et/ou la position angulaire du bloc de rouleaux, et l'unité de commande (16) régule la vitesse de rotation et/ou la position angulaire.

**5.** Banc d'essai à rouleaux selon la revendication 5, dans lequel sont prévus plusieurs dispositifs de mesure (8, 8a, 8b) dont les signaux sont additionnés ou mis en moyenne.

**6.** Banc d'essai à rouleaux selon l'une quelconque des revendications 1 à 5, dans lequel est prévu au moins un dispositif (9) de mesure de force ou de couple qui détermine la force ou le couple appliqué par l'unité d'entraînement (7).

**7.** Banc d'essai à rouleaux selon l'une quelconque des revendications 1 à 6, dans lequel est prévu au moins une liaison de bloc de rouleaux (12, 12a), en particulier une courroie ou une chaîne, pour entraîner le second bloc de rouleaux (2).

**8.** Banc d'essai à rouleaux selon la revendication 7, dans lequel la masse centrifuge des rouleaux de contact (3, 4) du bloc de rouleaux entraîné (1) est plus grande que la masse centrifuge des rouleaux de contact (5, 6) du second bloc de rouleaux (2).

**9.** Banc d'essai à rouleaux selon l'une quelconque des revendications 1 à 6, dans lequel sont prévues deux unités d'entraînement (7, 15) qui entraînent chacune un bloc de rouleaux.

**10.** Banc d'essai à rouleaux selon la revendication 9, dans lequel chaque bloc de rouleaux (1, 2) comporte un dispositif de mesure (8, 8a, 8b) pour déterminer la vitesse de rotation et/ou la position angulaire du bloc de rouleaux (1, 2).

**11.** Banc d'essai à rouleaux selon la revendication 10, dans lequel l'unité de commande (16) régule les vitesses de rotation et/ou les positions angulaires des deux blocs de rouleaux (1, 2) de telle sorte que les deux blocs de rouleaux (1, 2) ont une vitesse de rotation et/ou une position angulaire identique.

**12.** Banc d'essai à rouleaux selon la revendication 9, dans lequel l'unité de commande (16) comporte un actionneur commun qui commande les deux unités d'entraînement (7, 15).

**13.** Banc d'essai à rouleaux selon au moins une des revendications 1 à 12, dans lequel l'arbre (26) d'un bloc de rouleaux est supporté de manière rotative au moyen de paliers à roulement (11).

**14.** Banc d'essai à rouleaux selon au moins une des revendications 1 à 12, dans lequel un stator (19) de l'unité d'entraînement (7, 15) est supporté de manière rotative et oscillante.

**15.** Banc d'essai à rouleaux selon la revendication 14, dans lequel le stator (19) est supporté au moyen de paliers entraînés (10), en particulier de paliers entraînés en sens opposés.

**16.** Banc d'essai à rouleaux selon la revendication 14 ou 15, dans lequel le stator (19) est soutenu par un bras de couple (24) et un dispositif de mesure de force (25).

**17.** Banc d'essai à rouleaux selon au moins une des revendications 1 à 16, dans lequel l'arbre (26) du second bloc de rouleaux (2) est supporté de manière rotative et oscillante, en particulier avec des paliers entraînés en sens opposés.

**18.** Banc d'essai à rouleaux selon la revendication 16 ou 17, dans lequel le stator (19) de la seconde unité d'entraînement (15), supporté de manière rotative et oscillante, ou l'arbre (26) du second bloc de rouleaux supporté de manière rotative et oscillante agit sur le dispositif de mesure de force (9) par l'intermédiaire d'un second bras de couple (14).

**19.** Banc d'essai à rouleaux selon au moins une des revendications 1 à 18, dans lequel les paliers (10, 11) des blocs de rouleaux (1, 2) sont agencés entre les rouleaux de contact (3, 4, 5, 6).

**20.** Banc d'essai à rouleaux selon au moins une des revendications 1 à 19, dans lequel est prévu un arbre de bloc de rouleaux d'un seul tenant (17) qui forme l'axe de rotation des rouleaux de contact (3, 4) et correspond à l'arbre de rotor.

**21.** Banc d'essai à rouleaux selon au moins une des revendications 1 à 20, dans lequel une simulation de masse est effectuée en accélérant les blocs de rouleaux (1, 2) afin d'adapter la masse du banc d'essai en rotation à la masse du véhicule automobile à contrôler.

Fig. 1

Fig. 2

Fig. 3

Fig. 4

Fig. 5

Fig. 6

**IN DER BESCHREIBUNG AUFGEFÜHRTE DOKUMENTE**

**In der Beschreibung aufgeführte Patentdokumente**

- DE 19900620
- US 5101660 A
- EP 0424636 A